# EUROPEAN PATENT SPECIFICATION

(11) **EP 0 785 319 B1**
(45) Date of publication and mention of the grant of the patent: **10.12.2003**
(21) Application number: 96309576.5
(22) Date of filing: 31.12.1996
(51) Int. Cl.: E04F 15/10, E04F 13/18

(54) **Modular construction elements**
Modulares Bauelement
Elément de construction modulaire

(30) Priority: 22.01.1996 US 589728
(43) Date of publication of application: 23.07.1997
(60) Divisional application: 02250653.9
(73) Proprietor: L.B. Plastics Limited, Derbyshire, DE5 2JJ (GB)
(72) Inventor: Davis, Harry H., Mooresville, North Carolina 28115 (US)
(74) Representative: Sales, Robert Reginald

(56) References cited:
- EP-A- 0 381 339
- DE-A- 2 101 782
- DE-U- 1 966 366
- DE-U- 1 982 048
- DE-U- 7 042 144

## Description

This invention relates to modular construction elements in the nature of planks and to structures formed from an assembly of such planks. The invention is applicable, for example, in the construction of boat docks, piers, decks, patios, walkways, pontoon boat floors, and the like.

European Patent Specification No. 381339, German Utility Model No. 1982048 and German Utility Model No. 7042144 disclose decking structures formed from assemblies of interconnected planks or panels. However these are essentially rigid structures which have no provision for removal of surface water through the structure. German Patent Specification No. 2101782 discloses a form of decking structure which incorporates integral drainage channels or recesses. However these interfere with the integrity of the upper surface of the decking and weaken the structure.

It is an object of the invention to provide a modular, one-piece plastic construction element which may be readily assembled together with a number of like planks to form a decking or other structure which will adapt to irregularities in a supporting structure on which it is assembled and which provides for drainage of surface water through the decking surface.

According to the invention there is provided an elongate modular construction element for assembly with a plurality of like elements to form a structure such as decking, said element being in the nature of a plank comprising spaced top and bottom walls interconnected by opposed side walls to define a void therein, the top wall being continuous, first connecting means projecting outwardly from one side of the plank, and second connecting means complementary to said first connecting means formed at the opposite side of the plank whereby two or more such planks may be connected together in side by side relation, characterised by the combination of the following features:-
(1) said connecting means are located adjacent said bottom wall of the plank extend continuously along the plank from one end thereof to the other and are adapted to enable adjacent planks to be interconnected solely at the bottom of the planks by lateral engagement with one another;
(2) said first connecting means (35) are dimensioned to project outwardly beyond the associated side (23) of the plank (20), the first and second connecting means (35, 41) are adapted to permit limited sliding movement of the planks (20) in a direction transverse to the lengths of the planks, the limited degree of relative lateral movement being such that the top walls (21) of adjacent planks can be arranged, depending on the required use, either in abutment with one another or spaced apart from one another, both arrangements being possible, wherein said spacing of the top walls (21) creates drainage slots leading to a generally triangular cavity defined by said connecting means (35, 41) and the sloping side walls (23, 24) of adjacent planks;
(3) said connecting means are adapted to permit limited sliding movement of adjacent planks relative to one another in a direction transverse to the lengths of the planks and limited angular movement about an axis extending parallel to the lengths thereof to accommodate irregularities in a base or other supporting structure on or by which the resultant decking or other structure is supported.

Preferably said second connecting means comprises a channel extending adjacent said bottom wall at the opposite side of the decking plank from said first connecting means for receiving a connecting portion of said flange.

The invention also provides a decking or other structure formed from a plurality of interconnected modular construction elements as aforesaid.

An embodiment of the invention will now be described, by way of example only, with reference to the accompanying drawings, in which:-
Figure 1 is a fragmentary perspective view of a decking structure comprising an assembly of decking planks according to one embodiment of the invention;
Figure 2 is a fragmentary perspective view of a number of decking planks mounted on joists of a supporting subfloor, showing the connecting means for locking adjacent planks together;
Figure 3 is an end view of one of the decking planks shown in Figure 2;
Figure 4 is an enlarged view of the circled area 'A' in Figure 3 showing a portion of the slip-resistant top surface of the decking plank;
Figure 5 is an enlarged view of the circled area 'B' in Figure 3 showing an integrally-formed flange of the decking plank;
Figure 6 is an enlarged view of the circled area 'C' in Figure 3 showing an integrally-formed complementary channel of the decking plank;
Figure 7 is an enlarged view of the circled area 'D' in Figure 3 showing an integrally-formed trim channel of the decking plank;
Figure 8 is an end view of an elongate fastener strip used for initiating decking construction;
Figure 9 is an end view of an elongate decking trim section for attachment to a longitudinal side of the decking plank;
Figure 10 is an end view of an elongate cap member for attachment to exposed ends of the decking planks;
Figure 11 is a perspective view of an alternative end cap for attachment to a distal end of a single decking plank;
Figure 12 is an end view of an elongate T-section for positioning adjacent to abutting ends of the decking planks;
Figure 13 is a cross-sectional view of two adjacent decking planks attached together;
Figure 14 is an enlarged fragmentary perspective view showing a decking trim according to Figure 9 positioned for attachment to a decking plank adjacent an exposed side edge of the decking structure;
Figure 15 is an enlarged fragmentary perspective view showing a flange according to Figure 8 used for beginning decking construction, and a cap member according to Figure 10 positioned for attachment to a decking plank; and
Figure 16 is an enlarged fragmentary view showing a modified form of connecting means.

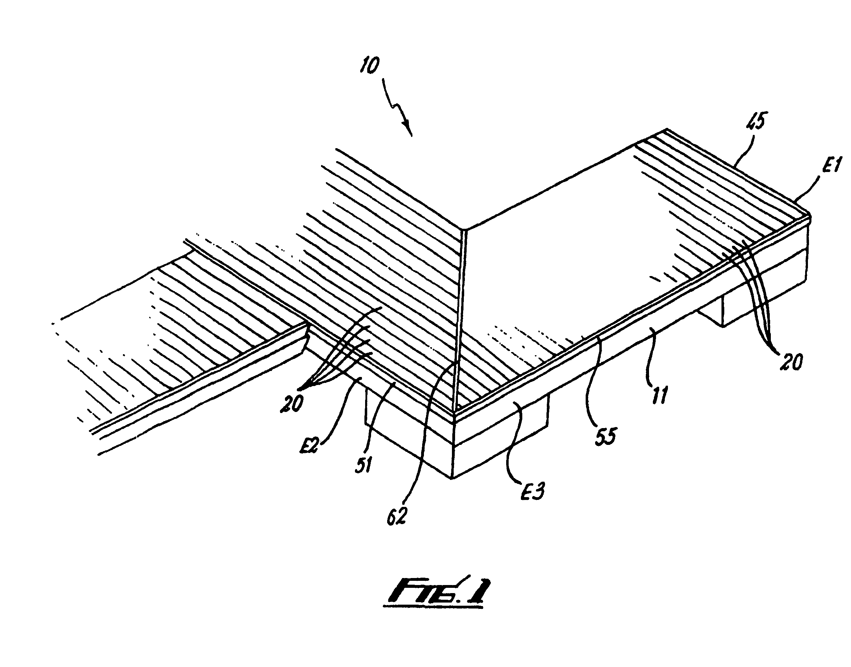

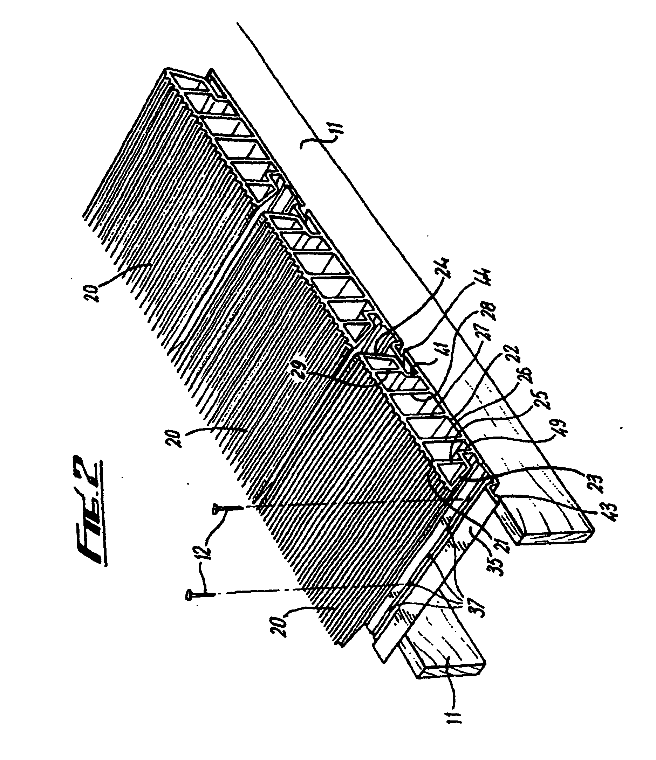

Referring to the drawings, a decking structure according to the present invention is illustrated in Figure 1 and shown generally at 10. The decking structure 10 is constructed of an assembly of one-piece modular construction elements in the form of decking planks 20 mounted on supporting joists 11 of a subfloor using wood screws 12, as shown in Figure 2, or other suitable fasteners (not shown). The decking planks 20 are formed of an extruded high impact, UV stabilized polymeric material, such as PVC plastic, and are easily cut with a hand saw or electric circular saw to any desired length. According to the embodiment disclosed, the width of the decking plank 20 is 5.750 inches, and the height is 1.625 inches. The maximum space between adjacent planks is approximately 0.25 inches. Numerous other dimensions are possible within the scope of the invention. Moreover, while a boat dock is illustrated in Figure 1, the invention has further application in construction of patio decks, piers, walkways, balconies, and the like.

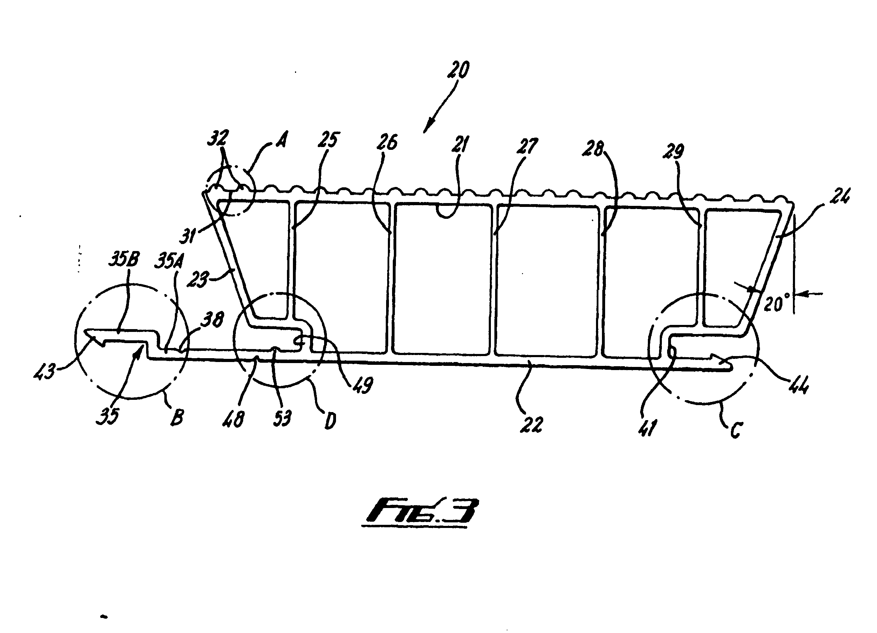

Referring to Figures 2 and 3, the decking plank 20 includes integrally-formed top and bottom walls 21 and 22, and opposing side walls 23 and 24. Integral reinforcing ribs 25, 26, 27, 28, and 29 are located between the side walls 23 and 24, and bridge the top and bottom walls 21 and 22. The ribs 25-29 extend longitudinally from one end of the decking plank 20 to the opposite end for increasing its load-resisting capacity. The side walls 23 and 24 converge towards the bottom wall 22 at an angle of about 20°.

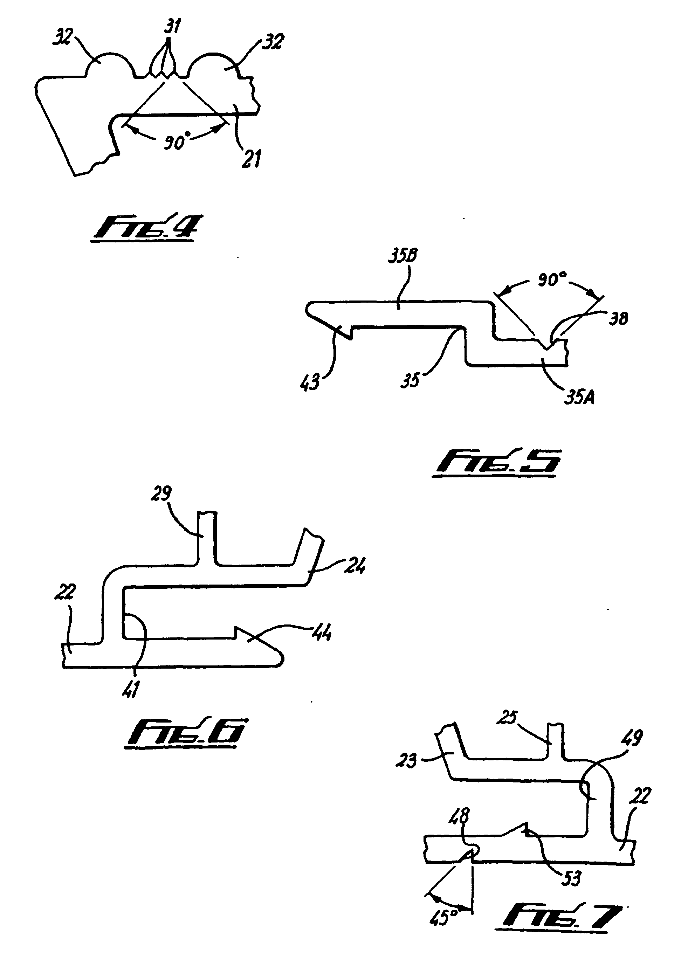

A portion of the top wall 21 is illustrated in detail in Figure 4. The top surface includes a number of alternately-spaced serrations 31 and risers 32 extending along the entire length of the decking plank 20, and laterally from one side edge of decking plank 20 to the other. In the illustrated embodiment, the serrations 31 extend 0.015 inches above the top surface of the decking plank 20, and are spaced approximately 0.030 inches apart from each other. The risers 32 extend 0.062 inches above the top surface, and are spaced approximately 0.25 inches apart. The rough texture provided by the serrations 31 and risers 32 creates a relatively slip-resistant decking surface.

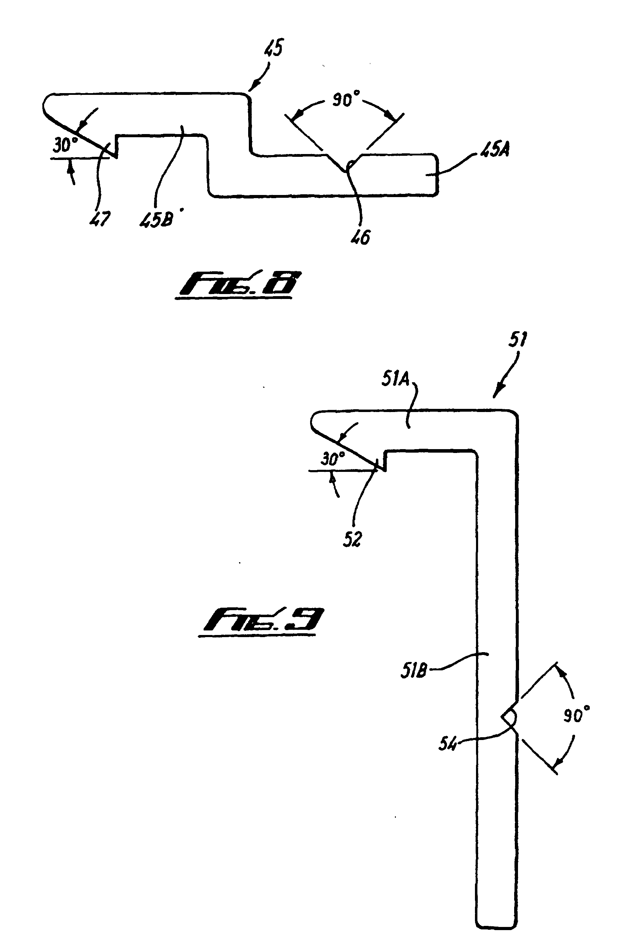

As shown in Figures 2, 3, and 5, an integrally-formed flange 35 extends outwardly from and along the bottom wall 22 on one side of the decking plank 20 along its entire length. The flange 35 includes a fastening portion 35A having a number of spaced openings 37 for receiving the wood screws 12 therethrough to the supporting joists 11, and for water drainage from a top surface of the decking structure 10. According to a preferred embodiment, the openings 37 are spaced 4.0 inches apart along the length of the flange 35 so that the planks 20 can be mounted to standard 16 inch centre joists. The unused openings 37 between the joists 12 are thus available for drainage.

In a modification the preformed openings 37 may be omitted, a small longitudinally extending groove 38 being formed in the flange 35 to help guide the screws 12 through the flange 35 and into the joists 11 of the subfloor. Enhanced water drainage may be achieved by sloping the decking plank 20 slightly from one end to the other. This embodiment of the invention without openings 37 is especially applicable for use in overhead decking whereby an area below the decking is sheltered from rain water runoff.

A connecting portion 35B of the flange 35 is integrally formed with the fastening portion 35A, and provided for attaching the decking plank 20 to an adjacent like plank. The connecting portion 35B extends outwardly in a plane above the fastening portion 35A and engages with a fastening channel 41 of the adjacent plank 20, as is best shown in Figure 13.

The channel 41 is integrally formed along the bottom wall 22 on the side of the decking plank 20 opposite the flange 35. The channel 41 extends longitudinally along the entire length of the decking plank 20, and cooperates with the connecting portion 35B of the flange 35 to space the adjacent planks 20 from each other and to attach the adjacent planks 20 together. The connecting portion 35B and channel 41 include interfering shoulders 43 and 44 providing a snap-attachment to lock the adjacent decking planks 20 to each other while permitting a limited degree of relative lateral movement between them.

The top walls of the adjacent planks may thus be spaced apart to a limited variable extent. Spacing of the top walls creates series of longitudinal slots in the upper surface of the decking structure, through which surface water may drain into the generally triangular recesses defined by the sloping side walls 23 and 24 of the adjacent planks and the connecting members 35. These recesses may also serve to accommodate electrical or other cables to supply services at spaced locations along the assembled structure. Moreover by virtue of the relatively loose engagement between the connecting members 35 and 41, a limited degree of angular movement is permitted between adjacent planks to accommodate irregularities in level of the supporting joists 11.

A second channel or recess 49 is formed in the side wall 23 adjacent to the bottom wall 22 for receiving a flange portion 51A of decking trim 51 shown in Figures 1, 9, and 14. The decking trim 51 is used to finish an exposed side edge of the decking structure 10, as described further below.

To construct the decking, an elongate fastener strip 45, shown in Figures 1, 8, and 15, is first mounted on the supporting joists 11 at a side edge "E1" of the decking structure. A longitudinally extending groove 46 is formed in a mounting portion 45A of the strip 45 for guiding wood screws 12 or other fasteners therethrough to the joists 11. A first decking plank 20 is placed on the joists 11, and its fastening channel 41 snap-attached to a locking portion 45B of the fastener strip 45. A locking shoulder 47 is formed with the portion 45B, and cooperates with the shoulder 44 of the channel 41 to lock the decking plank 20 and fastener strip 45 together while permitting a limited degree of relative lateral movement between them. Successive planks 20 are then snap-attached together by inserting the connecting portion of the flange 35 of one plank 20 into the channel 41 of an adjacent plank, as shown in Figure 13. The planks 20 are secured one-by-one to the joists 11 by screws 12 as described above. The complementary connecting portions 35B and channels 41 of respective, adjacent planks 20 cooperate to space the planks 20 a predetermined distance from each other within the range of lateral adjustment permitted by the construction of these components. Separate spacers (not shown) may be used to achieve exact parallel spacing between adjacent planks.

Referring to Figures 1, 3, and 9, upon reaching a second side edge "E2" of the proposed decking structure, the flange 35 of the last fitted decking plank 20 is removed using a saw at a groove 48 formed at the junction of the bottom wall 22 and the flange 35. The groove 48 preferably extends along the entire length of the decking plank 20 and forms a parting line, as described above. After removing the flange 35, a locking portion 51A of a decking trim 51 is inserted into the trim channel 49 at the side edge "E2" of the decking structure 10. As best shown in Figure 14, the portion 51A and the channel 49 include interfering shoulders 52 and 53 for providing a convenient snap-attachment to lock the trim 51 and decking plank 20 together. A groove 54 is formed in the web 51B of the decking trim 51 for receiving screws 12 to secure the trim 51 directly to the adjacent supporting joist 11. If desired the joists 11 may be covered with an elongate plastic or vinyl cladding (not shown).

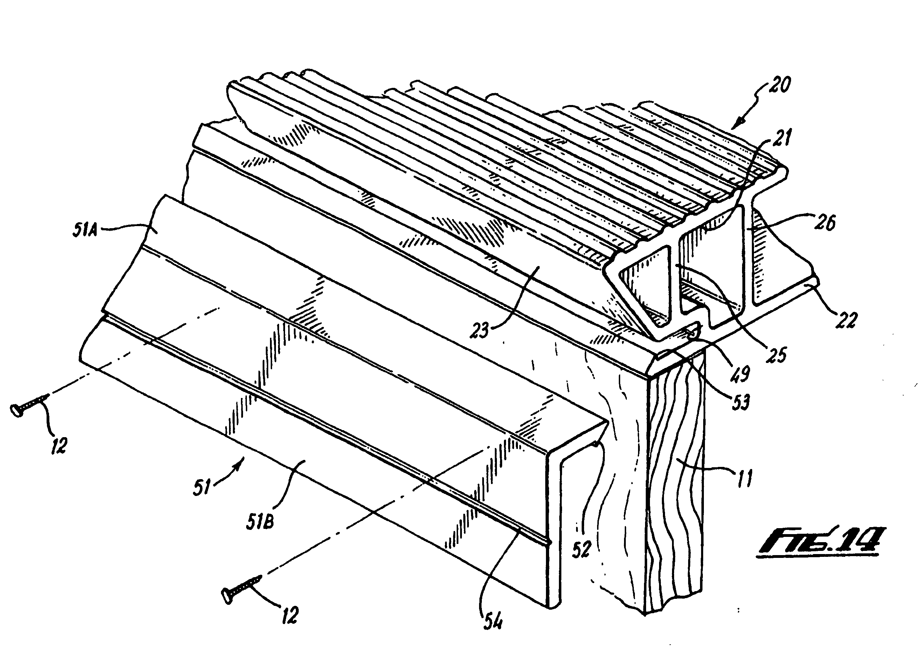

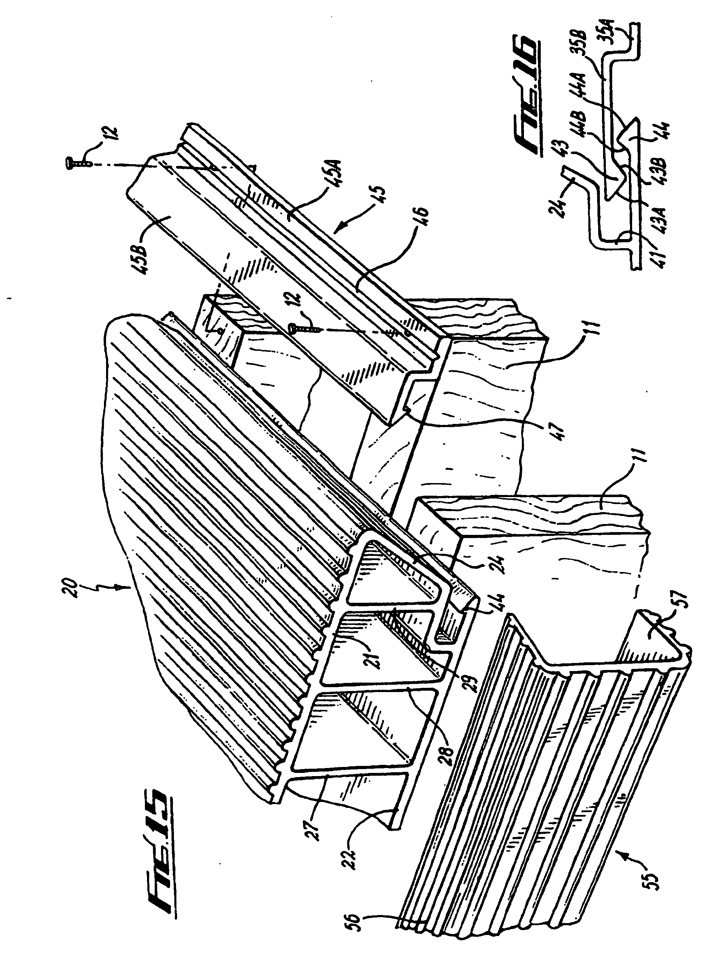

Referring to Figures 1, 10, and 15, at an adjacent side edge "E3" of the decking structure 10, an elongate C-shaped cap 55 shown in Figures 10 and 15 may be applied to the exposed ends of the decking planks 20 to provide a more attractive and aesthetic side finish. The cap 55 includes spaced apart resilient arms 56 and 57 which slightly converge so that when they are spread and forced onto the exposed ends of planks 20, they frictionally engage the planks 20. One or more caps 55 may be used to finish the exposed side edge "E3". Alternatively, each plank 20 can be fitted with an end cover 61 such as shown in Figure 11.

In addition, as shown in Figures 1 and 12, an elongate cover trim 62 of T-section may be positioned at mitered, abutting ends of decking planks 20 to provide a uniform and aesthetic transition between the planks 20. The T-section trim 62 includes a textured top surface with alternately spaced serrations 63 and risers 64, and a centre web 65 for locating between the abutting planks 20. The T-section trim 62 and end cap 55 may be further secured to the decking planks 20 with an adhesive or other suitable fastener if desired.

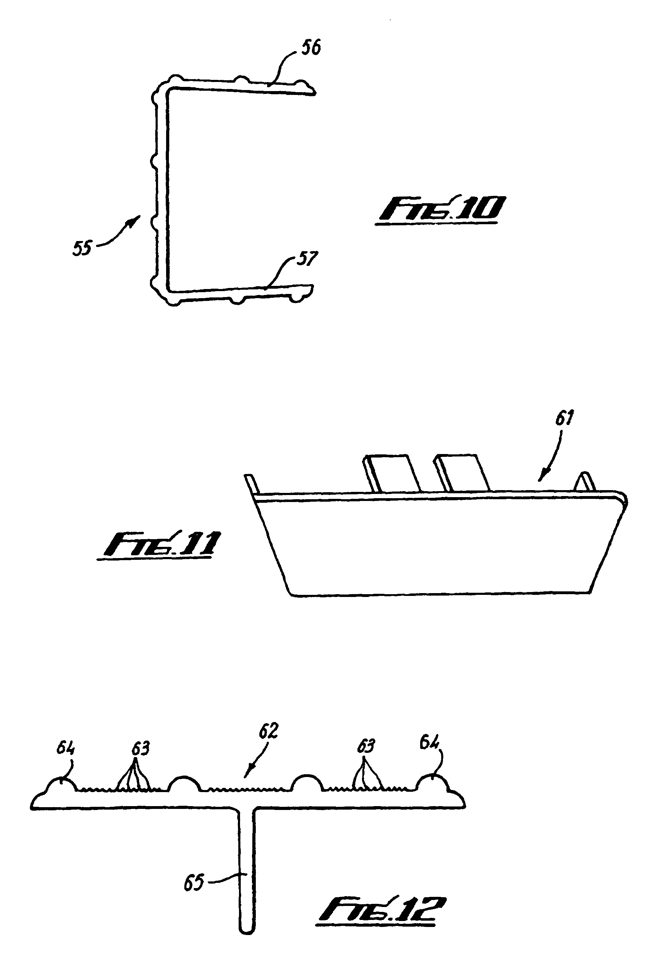

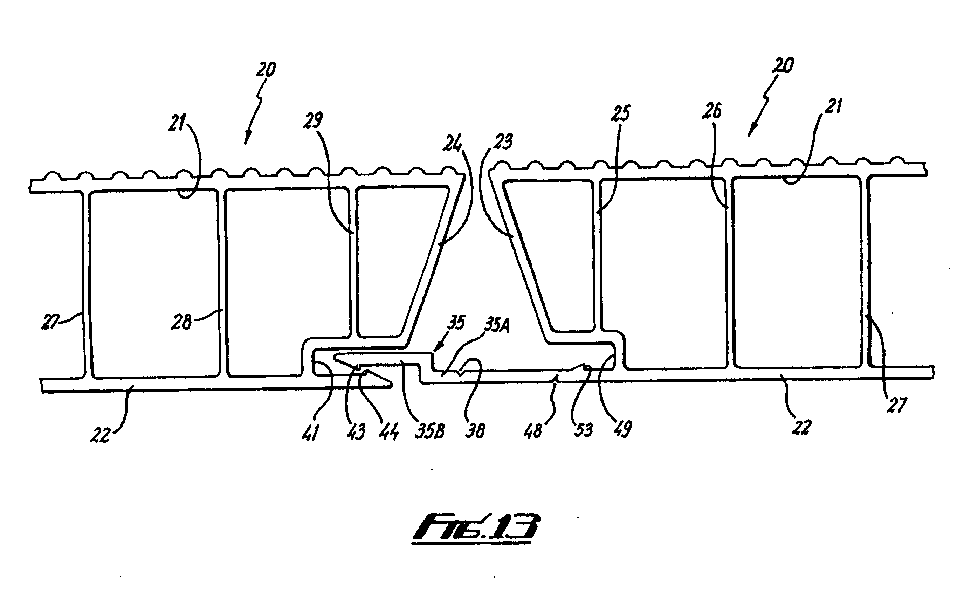

Figure 16 shows a modified form of connecting means similar to that shown in Figure 13 but in which the shoulders 43 and 44 have opposing sloping faces 43A, 43B and 44A, 44B. The sloping faces 43B and 44B replace the vertical abutting faces of the shoulders of Figure 13 and facilitate disengagement of the connecting means and separation of adjacent planks if required. The cooperating shoulders on the trim components of Figures 8 and 9 and the shoulder 53 may also be modified in a similar manner.

The decking structure described has numerous advantages over previously proposed wooden or plastic decking structures. There are no exposed nails or other fasteners at the surface of the decking structure which require replacement, or could cause injury. The embossed top surface provides enhanced slip-resistance and the integral construction of the individual planks avoids the need to engage interfitting components to form each plank. The manner of interconnection of the planks permits limited lateral adjustment between adjacent planks to accommodate to different overall widths of substructure and provides multiple drainage slots to clear water rapidly from the assembled structure.

It should be appreciated that while the invention is primarily intended for use in the construction of marine walkways and decking, plank elements according to the invention may also be used to construct cladding, screen fencing or other forms of structure.

## Claims

1. An elongate modular construction element for assembly with a plurality of like elements to form a structure such as decking, said element being in the nature of a plank (20) comprising spaced top and bottom walls (21, 22) interconnected by opposed side walls (23,24) to define a void therein, the top wall (21) being continuous, first connecting means (35) projecting outwardly from one side (23) of the plank, and second connecting means (41) complementary to said first connecting means formed at the opposite side (24) of the plank whereby two or more such planks may be connected together in side by side relation **characterised by** the combination of the following features:-
(1) said connecting means (35,41) are located adjacent said bottom wall (22) of the plank, extend continuously along the plank from one end thereof to the other, and are adapted to enable adjacent planks (20) to be interconnected solely at the bottom of the planks by lateral engagement with one another;
(2) said first connecting means (35) are dimensioned to project outwardly beyond the associated side (23) of the plank (20), the first and second connecting means (35, 41) are adapted to permit limited sliding movement of the interconnected adjacent planks (20) in a direction transverse to the lengths of the planks, the limited degree of relative lateral movement being such that the top walls (21) of adjacent planks can be arranged, depending on the required use, either in abutment with one another or spaced apart from one another, both arrangements being possible, wherein said spacing of the top walls (21) creates drainage slots leading to a generally triangular cavity defined by said connecting means (35, 41) and the sloping side walls (23, 24) of adjacent planks;
(3) said connecting means (35,41) are adapted to permit limited sliding movement of interconnected adjacent planks (20) relative to one another in a direction transverse to the lengths of the planks and limited angular movement about an axis extending parallel to the lengths thereof to accommodate irregularities in a base or other supporting structure (11) on or by which the resultant decking or other structure is supported.

2. A construction element according to claim 1, **characterised in that** said first connecting means comprises a laterally projecting flange (35) including a fastening portion (35A) for receiving fasteners (12) therethrough for attaching the plank (20) to said supporting structure (11).

3. A construction element according to claim 2, **characterised in that** said flange (35) includes a connecting portion (35B) extending in a plane parallel to but offset from the plane of said fastening portion (35A).

4. A construction element according to claim 3, **characterised in that** said second connecting means comprises a channel (41) extending adjacent said bottom wall (22) at the opposite side of the decking plank (20) from said first connecting means (35) for receiving the connecting portion (35A) of said flange.

5. A construction element according to claims 3 and 4, **characterised by** locking means (43,44) for locking the connecting portion (35B) of said flange on one plank (20) with the channel (41) of an adjacent plank.

6. A construction element according to claim 5, **characterised in that** said locking means comprises interfering shoulders (43,44) formed respectively on the connecting portion (35B) of said flange and within said channel (41).

7. A construction element according to any of claims 2 to 6, **characterised by** a longitudinally-extending groove (38) formed in the fastening portion (35A) of said flange for guiding said fasteners (12) therethrough to secure the plank (20) to said supporting structure (11).

8. A construction element according to any of claims 2 to 7, **characterised by** a plurality of spaced-apart holes (37) formed in said fastening portion (35A) of said flange for accommodating passage of fasteners (12) therethrough to said supporting structure (11).

9. A construction element according to any preceding claim **characterised in that** said side walls (23,24) of the plank (20) converge in a direction towards said bottom wall (22).

10. A construction element according to any of claims 2 to 9, **characterised by** a groove (48) formed along the length of the fastening portion (35A) of said flange to enable removal of the flange from a plank (20) positioned at an exposed edge of the assembled structure.

11. A construction element according to any preceding claim **characterised by** a further channel (49) formed adjacent said first connecting means (35) for receiving a trim member (51) adapted to cloak the exposed edge of the assembled structure.

12. A construction element according to any preceding claim **characterised by** a plurality of reinforcing ribs (25-29) located between said side walls (23,24) and interconnecting said top and bottom walls (21,22).

13. A structure, in particular a decking, **characterised in that** it comprises a plurality of interconnected modular construction elements (20) according to any preceding claim assembled together on a supporting structure (11).

## Patentansprüche

1. Längliches modulares Bauelement für den Zusammenbau mit einer Vielzahl gleichartiger Elemente zum Bilden einer Konstruktion, wie z.B. ein Deck, wobei das Element in der Art einer Planke bzw. Doppeldiele (20) vorliegt mit: voneinander beabstandeten oberen und unteren Wänden (21, 22), die durch gegenüberliegende Seitenwände (23, 24) miteinander verbunden sind, um einen Hohlraum darin zu bestimmen, wobei die obere Wand (21) durchgehend ist; einem ersten Verbindungsmittel (35), das von einer Seite (23) der Planke bzw. Doppeldiele nach aussen hervorsteht; und einem zweiten Verbindungsmittel (41), das zu dem ersten Verbindungsmittel komplementär ist, das an der entgegengesetzten Seite (24) der Planke gebildet ist, wobei zwei oder mehrere solcher Planken Seite an Seite miteinander verbunden werden können, **gekennzeichnet durch** die Kombination der folgenden Merkmale: ,
(1) die Verbindungsmittel (35, 41) sind neben der Bodenwand (22) der Planke angeordnet, erstrecken sich durchgehend entlang der Planke von ihrem einen Ende zu ihrem anderen Ende und sind dazu ausgelegt, um das Verbinden benachbarter Planken (20) lediglich am Boden der Planken **durch** seitlichen Eingriff miteinander zu ermöglichen;
(2) die ersten Verbindungsmittel (35) sind so dimensioniert, dass sie über die zugeordnete Seite (23) der Planke (20) nach aussen hervorstehen, wobei die ersten und die zweiten Verbindungsmittel (35, 41) dazu ausgelegt sind, um eine begrenzte Gleitbewegung der miteinander verbundenen benachbarten Planken (20) in einer sich quer zur Länge der Planken erstreckenden Richtung zu ermöglichen, wobei das begrenzte Ausmass der relativen seitlichen Bewegung derart ist, dass die oberen Wände (21) der benachbarten Planken je nach erforderlichem Bedarf entweder im Anschlag zueinander oder voneinander beabstandet angeordnet werden können, wobei beide Anordnungen möglich sind, wodurch die Beabstandung der oberen Wände (21) Drainageschlitze erzeugt, die zu einem im allgemeinen dreieckförmigen Hohlraum führen, der **durch** die Verbindungsmittel (35, 41) und die geneigten Seitenwände (23, 24) benachbarter Planken bestimmt ist;
(3) die Verbindungsmittel (35, 41) sind so ausgelegt, dass sie eine begrenzte Gleitbewegung der miteinander verbundenen benachbarten Planken (20) relativ zueinander in einer quer zu den Längen der Planken verlaufenden Richtung ermöglichen sowie eine begrenzte Winkelbewegung um eine sich parallel zu deren Längen erstreckende Achse ermöglichen, um Unregelmässigkeiten in einer Basis oder einer anderen Stützkonstruktion (11) auszugleichen, auf der oder mittels der das sich ergebende Deck oder die andere Konstrukion abgestützt ist.

2. Bauelement nach Anspruch 1, **dadurch gekennzeichnet, dass** das erste Verbindungsmittel einen seitlich hervorstehenden Flansch (35) aufweist, der einen Befestigungsabschnitt (35A) zur Aufnahme von Befestigungsvorrichtungen (12) durch ihn hindurch enthält, um die Planke (20) an der Stützkonstruktion (11) zu befestigen.

3. Bauelement nach Anspruch 2, **dadurch gekennzeichnet, dass** der Flansch (35) einen Verbindungsabschnitt (35B) enthält, der sich in einer Ebene erstreckt, die parallel zu der Ebene des Befestigungsabschnitts (35A) jedoch versetzt von ihr verläuft.

4. Bauelement nach Anspruch 3, **dadurch gekennzeichnet, dass** das zweite Verbindungsmittel einen Kanal (41) aufweist, der sich neben der Bodenwand (22) an der gegenüberliegenden Seite der Deckplanke (20) von dem ersten Verbindungsmittel (35) erstreckt, um den Verbindungsabschnitt (35A) des Flansches aufzunehmen.

5. Bauelement nach Anspruch 3 und 4, **gekennzeichnet durch** Verriegelungsmittel (43, 44) zum Verriegeln des Verbindungsabschnitts (35B) des Flansches an einer Planke (20) mit dem Kanal (41) einer benachbarten Planke.

6. Bauelement nach Anspruch 5, **dadurch gekennzeichnet, dass** das Verriegelungsmittel zusammenwirkende Schultern (43, 44) aufweist, die jeweils an dem Verbindungsabschnitt (35B) des Flansches und innerhalb des Kanals (41) ausgebildet sind.

7. Bauelement nach einem der Ansprüche 2 bis 6, **gekennzeichnet durch** eine sich in Längsrichtung erstreckende Nut (38), die in dem Befestigungsabschnitt (35A) des Flansches ausgebildet ist, um die Befestigungsvorrichtungen (12) hindurchzuführen, um die Planke (20) an der Stützkonstruktion (11) zu befestigen.

8. Bauelement nach einem der Ansprüche 2 bis 7, **gekennzeichnet durch** eine Vielzahl beabstandeter Löcher (37), die in dem Befestigungsabschnitt (35A) des Flansches ausgebildet sind, um den Durchtritt von Befestigungsvorrichtungen (12) **durch** sie hindurch zu der Stützkonstruktion (11) zu ermöglichen.

9. Bauelement nach einem der vorhergehenden Ansprüche, **dadurch gekennzeichnet, dass** die Seitenwände (23, 24) der Planke (20) in einer Richtung zu der Bodenwand (22) hin konvergieren.

10. Bauelement nach einem der Ansprüche 2 bis 9, **gekennzeichnet durch** eine Nut (48), die entlang der Länge des Befestigungsabschnitts (35A) des Flansches ausgebildet ist, um die Entfernung des Flansches von einer Planke (20) zu ermöglichen, die an einer freiliegenden Kante der zusammengebauten Konstruktion positioniert ist.

11. Bauelement nach einem der vorhergehenden Ansprüche, **gekennzeichnet durch** einen weiteren Kanal (49), der neben dem ersten Verbindungsmittel (35) ausgebildet ist, um ein Abschluss- bzw. Vollendungsglied (41) aufzunehmen, das zum Verdecken der freiliegenden Kante der zusammengebauten Konstruktion ausgelegt ist.

12. Bauelement nach einem der vorhergehenden Ansprüche, **gekennzeichnet durch** eine Vielzahl von Verstärkungsrippen (25-29), die zwischen den Seitenwänden (23, 24) angeordnet sind und die oberen und unteren Wände (21, 22) miteinander verbinden.

13. Konstruktion, insbesondere Deck, **dadurch gekennzeichnet, dass** sie eine Vielzahl miteinander verbundener modularer Bauelemente (20) nach einem der vorhergehenden Ansprüche aufweist, die auf einer Stützkonstruktion (11) zusammengebaut sind.

## Revendications

1. Elément de construction modulaire allongé destiné à être assemblé avec une pluralité d'éléments analogues pour former une structure telle qu'un platelage, ledit élément étant de la nature d'une planche (20) comportant des parois supérieure et inférieure espacées (21, 22), connectées mutuellement par des parois latérales opposées (23, 24) afin de définir un vide dans celui-ci, la paroi supérieure (21) étant continue, des premiers moyens de connexion (35) faisant saillie vers l'extérieur à partir d'un premier côté (23) de la planche, et des seconds moyens de connexion (41) complémentaires auxdits premiers moyens de connexion étant formés au niveau du coté opposé (24) de la planche, de sorte que deux ou plus de deux telles planches peuvent être connectées ensemble dans une relation côte-à-côte, **caractérisé par** la combinaison des caractéristiques suivantes :
(1) lesdits moyens de connexion (35, 41) sont positionnés adjacents à ladite paroi inférieure (22) de la planche, s'étendent de manière continue le long de la planche depuis une première extrémité de celle-ci vers l'autre extrémité, et sont adaptés pour permettre à des planches adjacentes (20) d'être connectées mutuellement seulement au niveau de la partie inférieure des planches par une mise en prise latérale l'une avec l'autre,
(2) lesdits premiers moyens de connexion (35) sont dimensionnés pour faire saillie vers l'extérieur au-delà du côté associé (23) de la planche (20), les premiers et seconds moyens de connexion (35, 41) sont adaptés pour permettre un déplacement coulissant limité des planches adjacentes mutuellement connectées (20) dans une direction transversale aux longueurs des planches, le degré limité de déplacement latéral relatif étant tel que les parois supérieures (21) des planches adjacentes peuvent être agencées, en fonction de l'utilisation souhaitée, soit en butée l'une avec l'autre ou soit espacées l'une de l'autre, les deux agencements étant possibles, ledit espacement des parois supérieures (21) créant des fentes de drainage menant à une cavité généralement triangulaire définie par lesdits moyens de connexion (35, 41) et les parois latérales inclinées (23, 24) de planches adjacentes,
(3) lesdits moyens de connexion (35, 41) sont adaptés pour permettre un déplacement coulissant limité de planches adjacentes connectées mutuellement (20) l'une par rapport à l'autre dans une direction transversale aux longueurs des planches, et un déplacement angulaire limité autour d'un axe s'étendant parallèlement aux longueurs de celles-ci, pour s'adapter à des irrégularités dans une base ou une autre structure de support (11), sur laquelle ou par laquelle est supporté le platelage, ou l'autre structure, résultant.

2. Elément de construction selon la revendication 1, **caractérisé en ce que** lesdits premiers moyens de connexion comportent un rebord faisant saillie latéralement (35), comportant une partie de fixation (35A) pour recevoir des fixations (12) à travers celle-ci, destinées à fixer la planche (20) sur ladite structure de support (11).

3. Elément de construction selon la revendication 2, **caractérisé en ce que** ledit rebord (35) comporte une partie de connexion (35B) s'étendant dans un plan parallèle au plan de ladite partie de fixation (35A), mais décalé par rapport à celui-ci.

4. Elément de construction selon la revendication 3, **caractérisé en ce que** lesdits seconds moyens de connexion comportent un canal (41) s'étendant adjacent à ladite paroi inférieure (22) au niveau du côté opposé de la planche de platelage (20) à partir desdits premiers moyens de connexion (35) pour recevoir la partie de connexion (35A) dudit rebord.

5. Elément de construction selon les revendications 3 et 4, **caractérisé par** des moyens de verrouillage (43, 44) destinés à verrouiller la partie de connexion (35B) dudit rebord sur une première planche (20) avec le canal (41) d'une planche adjacente.

6. Elément de construction selon la revendication 5, **caractérisé en ce que** lesdits moyens de verrouillage comportent des épaulements en interférence (43, 44) formés respectivement sur la partie de connexion (35B) dudit rebord, et dans ledit canal (41).

7. Elément de construction selon l'une quelconque des revendications 2 à 6, **caractérisé par** une gorge s'étendant longitudinalement (38) formée dans la partie de fixation (35A) dudit rebord pour guider lesdites fixations (12) à travers celle-ci, afin de fixer la planche (20) sur ladite structure de support (11).

8. Elément de construction selon l'une quelconque des revendications 2 à 7, **caractérisé par** une pluralité de trous espacés (37) formés dans ladite partie de fixation (35A) dudit rebord, pour accepter le passage de fixations (12) à travers ceux-ci vers ladite structure de support (11).

9. Elément de construction selon l'une quelconque des revendications précédentes, **caractérisé en ce que** lesdites parois latérales (23, 24) de la planche (20) convergent dans une direction vers ladite paroi inférieure (22).

10. Elément de construction selon l'une quelconque des revendications 2 à 9, **caractérisé par** une gorge (48) formée le long de la longueur de la partie de fixation (35A) dudit rebord, pour permettre un enlèvement du rebord à partir d'une planche (20) positionnée au niveau d'un bord exposé de la structure assemblée.

11. Elément de construction selon l'une quelconque des revendications précédentes, **caractérisé par** un canal supplémentaire (49) formé adjacent auxdits premiers moyens de connexion (35) pour recevoir un élément formant bordure (51) adapté pour masquer le bord exposé de la structure assemblée.

12. Elément de construction selon l'une quelconque des revendications précédentes, **caractérisé par** une pluralité de nervures de renforcement (25 à 29) positionnées entre lesdites parois latérales (23, 24), et connectant mutuellement lesdites parois supérieure et inférieure (21, 22).

13. Structure, en particulier platelage, **caractérisée en ce qu'**elle comporte une pluralité d'éléments de construction modulaires mutuellement connectés (20) selon l'une quelconque des revendications précédentes, assemblés ensemble sur une structure de support (11).
